# FASCICULE DE BREVET EUROPEEN

(11) **EP 1 109 394 B1**
(45) Date de publication et mention de la délivrance du brevet: **28.05.2003**
(21) Numéro de dépôt: 00402727.2
(22) Date de dépôt: 04.10.2000
(51) Int. Cl.: H04M 19/04

(54) **Procédé de sélection, d'édition et de diffusion d'un message sonore complexe**
Methode zur Auswählen, Bearbeiten und Spielen einer komplexen Tonmeldung
Method for selecting, editing and playing of a complex sound message

(30) Priorité: 14.10.1999 FR 9912841
(43) Date de publication de la demande: 20.06.2001
(73) Titulaire: SAGEM S.A., 75015 Paris (FR)
(72) Inventeur: Gresse, Philippe, Vaureal 95490 (FR)
(74) Mandataire: Schmit, Christian Norbert Marie

(56) Documents cités:
- EP-A- 0 795 845
- EP-A- 0 851 649
- EP-A- 0 933 917
- WO-A-98/25397

## Description

La présente invention a pour objet un procédé de sélection, d'édition et de diffusion d'un message sonore complexe. Le domaine de l'invention est la téléphonie mobile, mais le domaine peut s'étendre à tous les appareils susceptibles d'émettre des sons consécutivement à un événement et dotés d'un écran et d'un moyen de saisie. Le moyen de saisie peut être par exemple un clavier, un écran tactile, ce n'est pas une liste exhaustive . Le but de l'invention est de permettre à l'utilisateur d'un téléphone mobile selon l'invention de personnaliser la sonnerie de ce téléphone mobile. Cette personnalisation permet à l'utilisateur de savoir si c'est son propre téléphone mobile qui sonne, ou celui de l'un de ses voisins.

Dans l'état de la technique, on connaît des téléphones mobiles qui comportent dans une mémoire un certain nombre de mélodies de sonneries préenregistrées. L'utilisateur, via les menus du téléphone mobile, peut alors choisir la sonnerie qui sera la sienne. Cependant le nombre de sonneries ainsi contenues dans le téléphone mobile est limité par la capacité de mémoire de ce téléphone mobile. Celle-ci est elle-même limitée par des contraintes d'intégration. Dans la pratique, le nombre de sonneries ainsi laissées au choix de l'utilisateur n'excède pas dix. Or il y a bien plus de dix utilisateurs d'un même téléphone mobile dans le monde sans compter que bien souvent, pour un fabriquant donné, les sonneries de téléphone sont les mêmes quel que soit le modèle. Il est aussi fréquent que l'on retrouve des sonneries d'une marque à l'autre. La probabilité pour que deux utilisateurs d'un téléphone mobile utilisant la même sonnerie se retrouvent voisins n'est donc pas négligeable.

La solution consistant à augmenter le nombre des mélodies préenregistrées n'est pas envisageable. En effet ces mélodies seraient stockées dans une zone de la mémoire du téléphone qui ne serait accédée que lors d'une sonnerie ou de la sélection de la mélodie de sonnerie. Cela constitue un gaspillage même si l'on envisage de compresser les sonneries qui ne sont pas utilisées.

Dans l'état de la technique on connaît aussi des téléphones mobiles qui se connectent à un serveur distant de mélodies. Le serveur distant comporte des milliers de mélodies de sonneries qui peuvent être consultées à volonté par les utilisateurs d'un tel téléphone mobile. Cette solution présente deux inconvénients. Un premier inconvénient est le temps de consultation des mélodies enregistrées sur le serveur distant. En effet consulter des milliers de mélodies prend du temps et les mémoriser demande un effort considérable voire impossible. Il n'est donc pas aisé pour l'utilisateur de faire son choix. De plus il est très possible que l'autonomie du téléphone mobile ne suffise pas à la consultation de toutes les mélodies stockées sur le serveur. Si dans cette solution le choix est vaste, il n'est pas du tout facilité.

Le deuxième problème de cette solution vient du fait que la consultation se fait alors que le téléphone mobile est connecté, et en communication avec le réseau. Lors du choix de sa mélodie de sonnerie, l'utilisateur va donc s'approprier une partie de la bande passante du réseau. Cette opération va donc avoir un coût pour l'opérateur. De plus cet opérateur se doit de maintenir le serveur de mélodies de sonneries.

Dans l'état de la technique, on connaît aussi le document EP-A-0 851 649.

L'invention résout ces problèmes en permettant à l'utilisateur de personnaliser sa mélodie de sonnerie. Pour ce faire l'utilisateur peut, soit modifier une sonnerie existante dans le téléphone mobile, soit créer sa propre mélodie. Dans les deux cas il s'agit d'une édition. Le procédé selon l'invention permet de visualiser sur un écran du téléphone mobile une mélodie de sonnerie. Dans une réalisation préférée il s'agit d'une portée qui comporte les notes correspondant à la mélodie de sonnerie qu'est en train d'éditer l'utilisateur. Au cours de cette édition, et grâce au clavier du téléphone mobile, l'utilisateur peut modifier les propriétés des notes déjà présentes sur la partition, en insérer de nouvelles ou en supprimer. Une fois l'édition terminée l'utilisateur valide la mélodie qui est alors enregistrée dans la mémoire de diffusion du téléphone mobile. Dès lors c'est la mélodie qui vient d'être éditée qui sera utilisée lors des sonneries du téléphone mobile.

L'invention a donc pour objet un procédé de sélection et de diffusion d'un message sonore complexe diffusé par un téléphone mobile, comportant les étapes suivantes :
- on enregistre dans une mémoire de diffusion des informations numériques correspondant au message sonore complexe,
- on diffuse le message sonore complexe, contenu de la mémoire de diffusion, sur un haut-parleur du téléphone mobile
- on affiche le contenu d'une mémoire d'édition sur un écran du téléphone mobile,
- on modifie le contenu de la mémoire d'édition en fonction de pressions exercées sur des touches d'un clavier du téléphone mobile,
- on visualise les modifications du contenu de la mémoire d'édition sur l'écran du téléphone mobile,
- on recompose un message sonore complexe à partir du contenu de la mémoire d'édition,
- on enregistre le message sonore complexe recomposé dans la mémoire de diffusion.
caractérisé en ce que :
- on diffuse un son correspondant à un élément de la mémoire d'édition au moment ou cet élément est sélectionné et/ou modifié.

La présente invention sera mieux comprise à la lecture de la description qui suit et à l'examen des figures qui l'accompagnent. Celles- ci ne sont présentées qu'à titre indicatif et nullement limitatif de l'invention. Les figures montrent :
- Figure 1 : une illustration des moyens nécessaires à la mise en oeuvre du procédé selon l'invention.
- Figure 2 : une illustration d'étapes du procédé selon l'invention.
- Figure 3 : une illustration d'une structure d'une mémoire dans laquelle on enregistre un message sonore complexe.

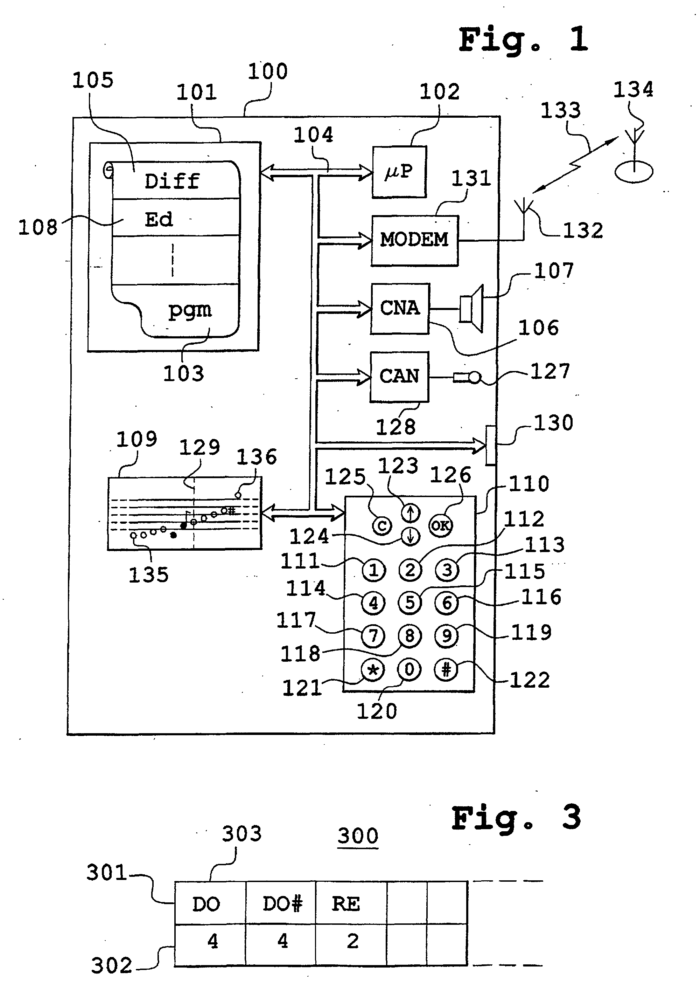

La figure 1 montre un téléphone 100 mobile comportant une mémoire 101 et un microprocesseur 102. La mémoire 101 comporte une zone mémoire 103 contenant les programmes, composés de codes d'instructions, qui commandent le microprocesseur 102. La mémoire 101 et le microprocesseur 102 sont connectés par un bus 104. Le bus 104 véhicule tous les signaux nécessaires au bon fonctionnement du téléphone 100, à savoir des signaux d'adresse, des signaux de données, des signaux de commande et des signaux d'interruption. La mémoire 101 comporte une zone 105 dite mémoire de diffusion, dans laquelle sont enregistrées des informations relatives à la mélodie de sonnerie du téléphone 100. Dans un exemple ces données sont des valeurs d'échantillon d'un signal sonore. Lorsque le microprocesseur 102 doit diffuser la mélodie enregistrée dans la mémoire 105, le microprocesseur 102 lit la valeur des échantillons enregistrés dans la mémoire 105 et soumet ces valeurs, via le bus 104, à un convertisseur numérique analogique 106. Le convertisseur 106 s'est connecté d'une part au bus 104 et d'autre part à un haut-parleur 107. Le signal analogique produit par le convertisseur 106 est donc diffusé acoustiquement par le haut-parleur 107.

Dans la description le contenu de la mémoire 105 est considéré comme étant une mélodie de sonnerie mais il peut s'agir d'une mélodie pouvant être émise par le téléphone 100 pour signaler un événement quelconque, ou simplement sur une commande de l'utilisateur du téléphone 100.

La mémoire 103 comporte les codes instructions correspondants au procédé selon l'invention. Le procédé selon l'invention utilise des données enregistrées dans une zone mémoire 108 appelée mémoire d'édition.

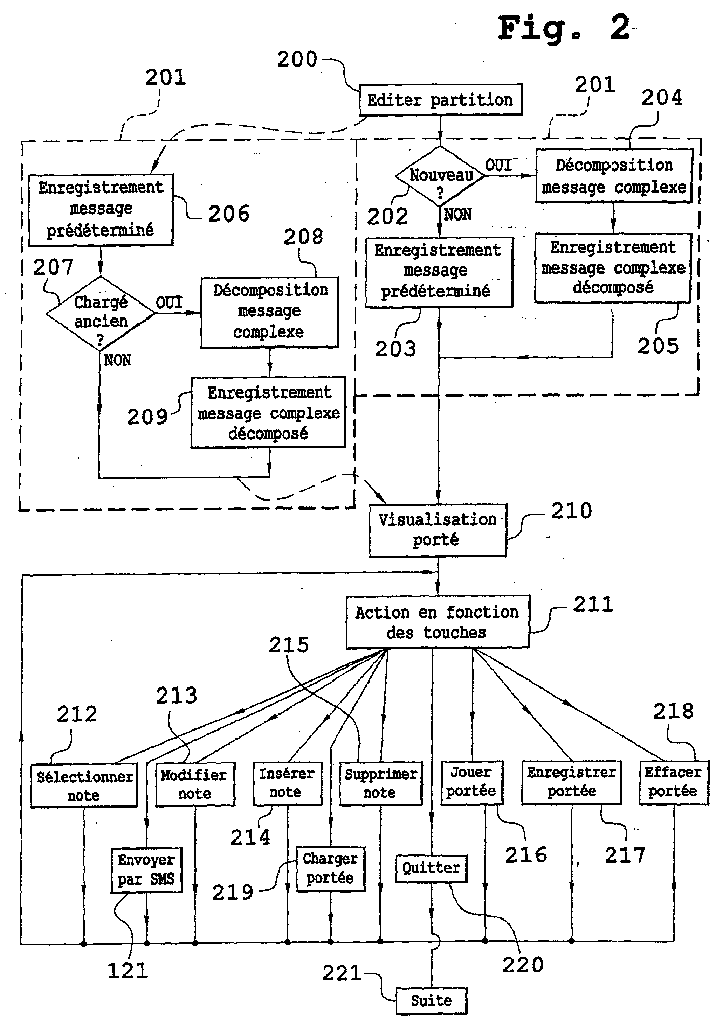

La figure 2 illustre des étapes du procédé selon l'invention. La figure 2 montre une étape 200 préliminaire d'édition de la partition. Dans l'étape 200, un utilisateur du téléphone 100 utilise des touches 123 à 126 d'un clavier 110 connecté au bus 104. Les touches 123 à 126 constituent un dispositif de pointage. La touche 125 permet à l'utilisateur d'entrer dans les menus du téléphone mobile. L'utilisateur utilise les touches 123 et 124 pour parcourir les différents choix offerts par ces menus, et la touche 126 pour sélectionner l'édition de partition parmi ces choix.

La mise en place de menu dit déroulant sur les téléphones mobiles se fait de manière courante. Cela consiste à afficher sur un écran 109 du téléphone mobile la liste de toutes les opérations que peut effectuer l'utilisateur à partir de ce téléphone mobile. L'utilisateur utilise alors des touches du clavier 110 pour sélectionner l'opération qu'il souhaite effectuer. L'emploi de ces touches déplace un pointeur sur l'écran 109. Ce pointeur permet de mettre en évidence, l'un après l'autre, les différents choix visualisés. Lorsque le bon choix est mis en évidence, il suffit d'appuyer sur une touche prédéterminée pour déclencher l'exécution de l'opération par le microprocesseur 102.

On passe alors à une étape 201 d'initialisation de la mémoire 108 d'édition. La figure 2 montre deux possibilités pour cette étape, mais il en existe d'autres. Dans une première version de l'étape 201, une étape 202 permet d'aiguiller le procédé entre l'édition d'une nouvelle partition ou l'édition d'une partition ancienne. Si l'utilisateur souhaite éditer une nouvelle partition, on passe à l'étape 203 d'enregistrement d'un message prédéterminé.

La figure 3 illustre un exemple de structure possible pour la mémoire 108 d'édition. Il s'agit d'un tableau à deux lignes, dont chaque colonne correspond à un message élémentaire. Chaque message élémentaire correspond quant à lui à une note. Chaque ligne correspond à une caractéristique de la note. L'ordre des notes dans le tableau correspond à l'ordre des notes dans lequel il sera diffusé par le microprocesseur 102 lors de la diffusion de la mélodie de sonnerie. Ainsi une première ligne 301 du tableau 300 correspond à la hauteur des notes, et une deuxième ligne 302 correspond à la durée des notes. On remarque qu'on pourrait rajouter des lignes, autant que l'on souhaiterait ajouter de caractéristiques aux notes, par exemple le timbre. La première colonne 303 de la table 300 correspond donc à la première note. Dans l'étape 301 on initialise donc, avec des valeurs prédéterminées en usine, la colonne 303. Dans l'exemple de la figure 303 il s'agit d'un do dont la durée est 4.

Dans la réalité, le do sera stocké sous forme d'un nombre fonction de sa fréquence, donc de sa hauteur sur une portée. S'il s'agit de la note la plus basse qui puisse être diffusée par le téléphone 100, alors elle est enregistrée en mémoire par la valeur 1. La note suivant la note la plus basse est enregistrée par la valeur 2 et ainsi de suite jusqu'à la note la plus aiguë. La valeur 4 correspond à quatre fois la durée d'une note la plus courte que peut diffuser le téléphone 100. Dans la pratique la durée de cette note la plus courte est choisie arbitrairement, la double croche par exemple. Il en est de même pour la note la plus basse. On passe à l'étape 210 de visualisation de la portée.

Si au cours de l'étape 202, l'utilisateur a choisi de modifier la mélodie existante, on passe à l'étape 204 de décomposition du message complexe. Dans l'étape 204, le microprocesseur 102 analyse le contenu de la mémoire 105. Il s'agit d'une analyse fréquencielle des échantillons enregistrés dans la mémoire 105 qui permet de déterminer la séquence de notes qui s'enchaînent. Pour l'analyse, on connaît la durée minimum d'une note. La durée de toutes les autres notes est un multiple entier de cette durée. Pour l'analyse fréquencielle, il suffit donc d'étudier les échantillons correspondant à cette durée en commençant par le premier échantillon. Si l'on constate au cours de l'analyse que plusieurs notes identiques se suivent, il suffit de transformer cette succession de notes en une seule et même note ayant une durée supérieure. On passe alors à une étape 205 d'enregistrement du message complexe décomposé.

Dans l'étape 205 la séquence de notes issues de l'analyse de l'étape 204 est stockée dans la table 300 de la mémoire 108. A l'issue de l'étape 205 sont donc enregistrées dans la mémoire 108 une succession de notes ainsi que leur durée. On passe à l'étape 210.

L'étape 201 aurait aussi pu être initiée par une étape 206 similaire à l'étape 203. L'étape 206 serait suivie d'une étape 207 qui donne le choix à l'utilisateur d'éditer la précédente mélodie. Si l'utilisateur souhaite éditer la précédente mélodie on passe à une étape 208 similaire à l'étape 204 suivie d'une étape 209 similaire à l'étape 205. Les étapes 207 et 209 sont suivies de l'étape 210.

Dans une variante de l'invention, on peut envisager que le contenu de la mémoire 105 ne soit pas des valeurs d'échantillons mais un tableau du type du tableau 300. Dans ce cas avant de jouer la mélodie, le microprocesseur 102 est alors obligé de convertir les données de ce tableau 300 en valeurs d'échantillons qu'il soumet au convertisseur 106. Cette conversion s'effectue à l'aide d'une table de correspondance entre les données d'une table de type 300 et les valeurs d'échantillon. Ces valeurs d'échantillon peuvent aussi être obtenues par le calcul grâce à une fonction, puisqu'il s'agit pour les notes jouées par le téléphone sont des harmoniques pures. Les fonctions sinus au cosinus à la bonne fréquence feront donc très bien l'affaire.

Dans l'étape 210 on analyse le contenu de la mémoire 108 et on l'affiche sur l'écran 109, les notes enregistrées dans la mémoire 108. On analyse les notes les unes après les autres et on les affiche de la gauche vers la droite dans l'ordre dans lequel elle se présente en mémoire. L'écran 109 est connecté au bus 104. On positionne chaque note contenue dans la table 300 de la mémoire 108 sur une portée affichée sur l'écran 109. La hauteur d'une note sur la portée est fonction de la valeur enregistrée dans la case de la ligne 301, correspondant à la note à afficher, de la table 300. Pour chaque valeur possible dans la ligne 301 correspond une position, en hauteur, sur la portée affichée sur l'écran.

La durée des notes est représentée par leur représentation à l'écran. Dans l'exemple on considère que la note la plus courte pouvant être jouée par le téléphone 100 étaie une double-croche. C'est-à-dire qu'une valeur de 1 dans une case de la ligne 302 signifie que la note correspondante est une double croche.

Ainsi, suivant les cas, dans l'étape 210, on visualise soit une portée ne comportant qu'une note si l'utilisateur souhaite éditer une nouvelle partition cette note étant la note prédéterminée soit dans notre exemple une noire ayant comme hauteur le do. Soit on visualise la précédente mélodie éditée. Dans ce cas on visualise alors une séquence de notes dont les hauteurs varient d'un do au la de l'octave supérieur. Il est aussi possible d'affecter à une note un dièse ou un bémol, dans ce cas le symbole correspondant est affiché sur la portée à la suite de la note.

L'écran 109 ne permet de visualiser qu'une partie de la portée. On passe à l'étape 211 de déclenchement d'une action en fonction de la touche du clavier 110 enfoncé. Dans l'étape 211 on attend qu'une touche soit enfoncée. Lorsqu'une touche est enfoncée, on déclenche l'action correspondante.

Dans une étape 212 on sélectionne une note. Dans l'étape 212 on utilise la touche 125 pour passer à la note précédente, et la touche 126 pour passer à la note suivante. A l'issue de l'étape 210, la note active est la première note de la portée, soit celle qui est située le plus à gauche sur l'écran 109. Dans un exemple, la note active est visualisée par un curseur 129 vertical qui barre l'écran 109, et qui est représenté en pointillés au niveau de la note active. Si la note active est en bordure de l'écran 109 et que l'on appuie sur l'une des touches pour aller voir au-delà de cette bordure, l'ensemble des notes représentées sur l'écran 109 est décalé afin de faire apparaître la nouvelle note active. On émet un son correspondant à une note de la portée lorsque la note est nouvellement sélectionnée.

Si la note active est la première note de la portée et que l'on souhaite voir la note qui la précède, cela n'est pas possible. De même si la note active est la dernière note de la portée et que l'on souhaite voir ce qui la suit, le curseur se positionne juste après la dernière note et on ne peut plus le déplacer au- delà.

Dans une étape 213 on utilise les touches 123 et 124 pour modifier la hauteur de la note active. Une pression sur la touche 123 permet de faire monter la note sur la portée, donc en fréquence. Lorsqu'on arrive à la note la plus haute qui puisse être représentée sur l'écran 109, alors la note dévient la note la plus basse. Si l'on appuie sur la touche 124, la note active descend d'un cran sur la portée. Si on arrive à la note la plus basse qui puisse être représentée sur la portée, la note devient la note la plus haute. Dans un exemple, si la note active est un do et que l'on appuie sur la touche 123, a note active devient alors un ré. Dans la pratique on considère que la note la plus basse possible pour composer une mélodie est un do 135, et que la note la plus haute est le sol 136 de l'octave suivante. Ainsi on couvre toute les notes que l'on peut représenter sur une porté. On émet un son correspondant à une note de la portée lorsque la note est modifiée.

Dans une étape 214, déclenché par l'appui sur une touche 117, on insère une nouvelle note. La nouvelle note est insérée à la position qui précède le curseur, donc la note active. Les propriétés de la nouvelle note sont celles de la note par défaut, mais ceci est un exemple. La nouvelle note peut en fait avoir n'importe quelle propriété qui sera par la suite modifiée. Une fois insérée la nouvelle note devient la note active afin de faciliter la mise à jour de ses caractéristiques. Parallèlement à la mise à jour de l'affichage de l'écran 109 lors de l'insertion d'une nouvelle note, la table 300 est mise à jour dans la mémoire 108. Les algorithmes de mise à jour de table sont connus. Dans une variante de l'invention, la table 300 pourrait être une liste chaînée de notes, cela aurait pour but de faciliter l'insertion et la suppression de notes. Mais la place nécessaire en mémoire serait plus grande. Toute action effectuée grâce à des touches du clavier 110 et visualisée à l'écran, est bien sûr répercuté dans la table de la mémoire 300.

Dans l'étape 215, qui suit l'enfoncement d'une touche 119, on supprime une note. La note supprimée est la note active. La nouvelle note active est la note qui suivait la note qui vient d'être supprimée. S'il n'y en a pas, le curseur est alors positionné juste après la dernière note de la portée. Si on appuie sur la touche 119 dans cette configuration, il ne se passe rien.

Dans une étape 216 déclenchée par l'enfoncement d'une touche 118 on lit séquentiellement, colonne par colonne, le contenu de la table 300. C'est à dire on parcourt chaque note l'une après l'autre. A chaque note on associe des valeurs d'échantillons contenues dans une table d'équivalence entre les hauteurs de notes et les valeurs d'échantillons. Ces valeurs d'échantillons sont alors envoyées au convertisseur 106. Le convertisseur 106 produit un signal analogique qui est transmis au haut-parleur 107 afin d'être diffusé. Cela revient à faire jouer par le téléphone 100 la portée actuellement en cours d'édition. Il existe dans la mémoire 101 une table d'équivalence entre les hauteurs de notes et les valeurs d'échantillon. Dans cette table chaque ligne correspond à une hauteur de note, et chaque colonne à une valeur d'échantillon. Il y a autant de valeurs d'échantillons par ligne qu'il en est nécessaire pour jouer la note de durée minimum jouable par le téléphone 100. Le nombre de valeur dépend d'un taux d'échantillonnage et de la qualité sonore souhaitée. Si la table 300 indique que la durée de la note à jouer est supérieure, alors on répète en boucle le contenu de la ligne correspondant à la hauteur de la note. Cette opération est répétée jusqu'à ce que la durée de la note soit atteinte. On passe alors à la note suivante dans la table 300.

Dans une étape 217 on enregistre la portée. Cela correspond au transfert du contenu de la mémoire 108 vers la mémoire 105. Dans le cas où la mémoire 105 contient des valeurs d'échantillon, on fait la même traduction que dans l'étape 216 si ce n'est qu'au lieu d'adresser les valeurs d'échantillon au convertisseur 106, on les écrit dans la mémoire 105. Dans le cas où la mémoire 105 contient des informations du même typé que la mémoire 108, il s'agit d'un simple transfert de données d'une mémoire à l'autre.

Dans l'étape 213 on peut aussi utiliser la touche 112 pour modifier la durée de la note active. Chaque pression sur la touche 112 augmente la durée de la note active. Les durées possibles pour les notes sont des multiples d'une durée minimale. Chaque appui sur la touche 112 augmente la durée de la note active de cette durée minimale. Lorsque l'on atteint la durée maximum possible, fixé dans un exemple à une blanche pointée deux fois, pour une note un nouvel appui sur la touche 112 fait que la durée de la note active devient alors la durée minimum jouable par le téléphone son. Une pression sur la touche 122 permet d'affecter à la note active un dièse, un bémol ou rien du tout. Une première pression sur la touche 122 affecte à la note un dièse, si on appuie une seconde fois on affecte à la note un bémol et si on rappuie alors que la note a déjà un bémol la note redevient une note normale, c'est-à-dire sans dièse ni bémol.

Dans une étape 218 déclenchée grâce à la touche 116, on efface la portée. C'est-à-dire on réinitialise le contenu de la table 300, en supprimant toutes les notes qu'elle contient. L'affichage de l'écran 109 est réinitialisé en conséquence, c'est-à-dire à une portée vide. Pour savoir quels sont les éléments de la table 300 qui doivent être affichés sur l'écran 109, il suffit, dans un exemple, de gérer un compteur qui compte le nombre de notes de la portée en cours d'édition. Si ce compteur vaut 0, cela signifie qu'il n'y a aucune note à afficher sur l'écran 109, sinon on affiche une note comprise dans la table 300 dont l'indice varie de 1 à la valeur du compteur. Effacer la portée revient donc à mettre ce compteur à 0.

Une étape 219 est déclenchée par la touche 111. Dans cette étape on charge la précédente partition, c'est à dire celle enregistrée dans la mémoire 105, dans la mémoire 105. Cette étape 219 correspond à une initialisation de la portée suivie de l'enchaînement des étapes 204, 205 et 210.

Dans l'étape 213, si on appuie sur la touche 115, la note active se voie affecter un point, si on rappuie une fois sur la touche 115, la note se voie affecter deux points et si on rappuie, la note redevient une note normale, c'est-à-dire sans point.

Dans l'étape 213, si on appuie sur la touche 114, on insère dans la portée un silence. C'est-à-dire une note n'ayant pas de hauteur mais une durée. On affiche alors à l'écran 109, juste devant la note active, le symbole correspondant au silence. Sa représentation dans la table 300 peut être une note ayant une hauteur nulle, mais d'une durée non nulle.

Un appui sur la touche 113 permet de passer dans une étape 220 qui permet de quitter l'édition sans copier le contenu de la mémoire 108 vers la mémoire 105. L'étape 220 est immédiatement suivie d'une étape 221 qui correspond à la reprise d'activité normale d'un téléphone mobile.

Une étape 222 déclenchée par la touche 121 correspond à l'envoi de la partition contenue dans la mémoire 108 par un message SMS. Ce message est adressé à un autre téléphone mobile. On considère le cas où la mémoire 105 a un contenu du même type que la mémoire 108. Cela évite d'avoir à redécrire une traduction déjà décrite. Dans l'étape 121, l'utilisateur du téléphone mobile saisit le numéro de téléphone de la personne à laquelle il souhaite envoyer sa mélodie. Une fois que cela est fait, il déclenche l'envoi de sa mélodie. La mélodie peut être envoyée par un ou plusieurs messages SMS (Short Message System ou Message Court) suivant la longueur de la mélodie. Ce, ou ces, message SMS contient alors dans son entête des renseignements concernant sa nature, un numéro d'ordre et le nombre total de messages afin de pouvoir gérer le cas ou il y a plusieurs messages. Les données du ou des messages SMS correspondent au contenu de la mémoire 108.

Lorsqu'un téléphone mobile selon l'invention reçoit un message SMS de cette nature, il enregistre le contenu de la ou des zones de données des messages dans la mémoire 105. Une fois que la mémoire 105 a été mise à jour, le téléphone mobile dispose d'une nouvelle mélodie de sonnerie.

La mélodie enregistrée dans la mémoire 105 peut aussi être transmise en utilisant n'importe quel mode de transmission de données prévues par le téléphone mobile. Cette transmission s'effectue par l'intermédiaire d'un modem 131 connecté au bus 104. D'autre part le modem 131 est aussi connecté à un aérien 132. Cet aérien 132 permet d'établir une connexion 133 de type radioélectrique avec une station de base 134. Le téléphone 100 est connecté à un réseau par l'intermédiaire de la station de base 134.

Dans un exemple on connecte, grâce à un port 130 connecté au bus 104, le téléphone 100 à un ordinateur sur lequel on a écrit une mélodie. On déclenche alors la mise à jour de la mémoire 105 à partir de l'ordinateur. Cette solution permet de disposer d'un environnement bien plus ergonomique pour composer la mélodie de sonnerie. En effet un écran d'ordinateur est bien plus grand qu'un écran de téléphone mobile, cela est aussi vrai pour les claviers qui comporte plus de touche pour un ordinateur.

On peut aussi mettre à jour le contenu de la mémoire 105 grâce à un microphone 127 connecté à un convertisseur analogique numérique 128 lui-même connecté au bus 104. Le convertisseur 128 met donc à la disposition du microprocesseur 102 des échantillons correspondant à une mélodie captée par le microphone 127. Ces échantillons sont alors enregistrés par le microprocesseur dans la mémoire 105. Il sera par la suite possible d'éditer cette mélodie qui a été enregistrée par l'intermédiaire du microphone 127. Cependant le passage de la mémoire 105 à la mémoire 108, dans ce cas, risque de provoquer des pertes d'information par rapport à la mélodie telle qu'enregistrée. En effet il n'y aura pas forcément correspondance entre les notes enregistrées et les notes stockées dans la table de correspondance entre valeurs d'échantillons et notes représentables sur une portée à l'écran 109. En effet les notes représentables sont limitées aux notes comprises entre un do d'un octave prédéterminé et le sol de l'octave suivante.

## Revendications

1. Procédé de sélection et de diffusion d'un message sonore complexe diffusé par un téléphone (100) mobile, comportant les étapes suivantes :
- on enregistre dans une mémoire (105) de diffusion du téléphone mobile des informations numériques correspondant au message sonore complexe,
- on diffuse le message sonore complexe, contenu de la mémoire de diffusion, sur un haut-parleur (107) du téléphone mobile,
- on affiche (210) le contenu d'une mémoire (108) d'édition du téléphone mobile sur un écran (109) du téléphone mobile,
- on modifie (213) le contenu de la mémoire d'édition en fonction de pressions exercées sur des touches d'un clavier du téléphone mobile,
- on visualise les modifications du contenu de la mémoire d'édition sur l'écran du téléphone mobile,
- on recompose (217) un message sonore complexe à partir du contenu de la mémoire d'édition,
- on enregistre (217) le message sonore complexe recomposé dans la mémoire de diffusion,
**caractérisé en ce que** :
- on diffuse un son correspondant à un élément de la mémoire d'édition au moment ou cet élément est sélectionné et/ou modifié, sur le haut-parleur.

2. Procédé selon la revendication 1, **caractérisé en ce que** :
- on décompose (204, 208) le message sonore complexe en une séquence de messages élémentaires,
- on enregistre (205, 209) la séquence de messages élémentaires dans la mémoire d'édition.

3. Procédé selon la revendication 1, **caractérisé en ce qu'**on enregistre (203, 206) dans la mémoire d'édition un message élémentaire prédéterminé.

4. Procédé selon l'une des revendications 1 à 3, **caractérisé en ce qu'**on sélectionne (200) un élément dans un menu du téléphone mobile pour accéder à un éditeur de partition musicale.

5. Procédé selon l'une des revendications 1 à 4, **caractérisé en ce qu'**on affiche (210) les messages élémentaires comme des notes sur une portée musicale.

6. Procédé selon la revendication 5, **caractérisé en ce que** :
- on sélectionne (212) une note sur la portée en utilisant une touche du clavier du téléphone,
- on modifie (213) les paramètres de la note sélectionnée, au nombre desquels se trouvent la hauteur et la durée, en utilisant une touche du téléphone.

7. Procédé selon l'une des revendications 5 ou 6, **caractérisé en ce que** :
- on sélectionne une note active sur la portée en utilisant une touche du téléphone mobile,
- on insère (214) une nouvelle note sur la portée en appuyant sur une touche du téléphone, la position de la nouvelle note précède celle de la note active,
- on affiche la note insérée sur la portée à l'écran du téléphone, la nouvelle note a des paramètres prédéterminés,
- on affiche la note insérée comme étant la note active.

8. Procédé selon l'une des revendications 5 à 7, **caractérisé en ce qu'**on émet un son correspondant à une note de la portée lorsque la note est nouvellement sélectionnée.

9. Procédé selon l'une des revendications 5 à 8, **caractérisé en ce qu'**on émet un son correspondant à une note de la portée lorsque la note est modifiée.

10. Procédé selon l'une des revendications 1 à 9, **caractérisé en ce qu'**on met à jour le contenu de la mémoire de diffusion à partir du contenu d'un message court reçu par le téléphone mobile.

11. Procédé selon l'une des revendications 1 à 10, **caractérisé en ce qu'**on met à jour le contenu de la mémoire d'édition à partir du contenu d'un message court reçu par le téléphone mobile.

12. Procédé selon l'une des revendications 1 à 11, **caractérisé en ce qu'**on met à jour le contenu de la mémoire de diffusion à partir de données reçues par le téléphone mobile dans un mode de transmission de données.

13. Procédé selon l'une des revendications 1 à 12, **caractérisé en ce qu'**on met à jour le contenu de la mémoire d'édition à partir de données reçues par le téléphone mobile dans un mode de transmission de données.

14. Procédé selon l'une des revendications 1 à 13, **caractérisé en ce qu'**on émet de manière radioélectrique le contenu de la mémoire de diffusion.

15. Procédé selon l'une des revendications 1 à 14, **caractérisé en ce qu'**on émet de manière radioélectrique le contenu de la mémoire d'édition.

16. Procédé selon l'une des revendications 1 à 15 **caractérisé en ce qu'**on met à jour le contenu de la mémoire de diffusion à partir d'un microphone du téléphone mobile.

## Patentansprüche

1. Verfahren zum Auswählen und Wiedergeben einer akustischen Nachricht, die über ein Mobiltelephon (100) ausgestrahlt wurde, mit den Schritten:
Abspeichern der digitalen Information, die einer komplexen akustischen Nachricht entspricht, in einem Wiedergabespeicher (105) des Mobiltelephons,
Wiedergeben der komplexen akustischen Nachricht in dem Wiedergabespeicher über einen Lautsprecher (107) des Mobiltelephons,
Anzeigen (210) des Inhalts eines Editierspeichers (108) des Mobiltelephons auf einem Schirm (109) des Mobiltelephons, Modifizieren (219) des Inhalts des Editierspeichers in Abhängigkeit von den gedrückten Tasten einer Tastatur des Mobiltelephons,
Darstellen der Modifizierungen des Inhalts in dem Editierspeicher auf dem Schirm des Mobiltelephons, Neuzusammensetzen (217) einer komplexen akustischen Nachricht aufgrund des Inhalts des Editierspeichers, Abspeichern (217) der neuzusammengesetzten komplexen akustischen Nachricht in dem Wiedergabespeicher,
**dadurch gekennzeichnet, dass**
ein Ton, der einem Element der Editierspeichers entspricht, in dem Moment über den Lautsprecher ausgestrahlt wird, wo dieses Element ausgewählt und/oder modifiziert wird.

2. Verfahren nach Anspruch 1,
**dadurch gekennzeichnet, dass**
die komplexe akustische Nachricht in eine Sequenz von Elementarnachrichten zerlegt wird (204, 208),
die Sequenz von Elementarnachrichten in dem Editierspeicher abgespeichert wird (205, 209).

3. Verfahren nach Anspruch 1,
**dadurch gekennzeichnet, dass**
in dem Editierspeicher eine vorgegebene Elementarnachricht abgespeichert wird (203, 206).

4. Verfahren nach einem der Ansprüche 1 bis 3,
**dadurch gekennzeichnet, dass**
ein Element in einem Menü des Mobiltelephons ausgewählt wird (200), um auf einen Musikpartitur- Editor zuzugreifen.

5. Verfahren nach einem der Ansprüche 1 bis 4,
**dadurch gekennzeichnet, dass**
die Elementarnachrichten als Noten auf Notenlinien angezeigt werden (210).

6. Verfahren nach Anspruch 5,
**dadurch gekennzeichnet, dass**
eine Note auf den Linien ausgewählt wird (212), indem eine Taste der Tastatur des Telephons verwendet wird,
die Parameter der ausgewählten Note einschließlich Höhe und Dauer modifiziert werden (213), indem eine Taste der Tastatur des Telephons verwendet wird.

7. Verfahren nach Anspruch 5 oder 6,
**dadurch gekennzeichnet, dass**
eine Note auf den Linien aktiviert wird, indem eine Taste des Mobiltelephons verwendet wird,
eine neue Note auf der Linie eingefügt wird (214), indem auf eine Taste des Telephons gedrückt wird, wobei die neue Note vor der aktiven Noten positioniert wird,
die auf der Linie auf dem Schirm des Telephons eingefügte Note angezeigt wird, wobei die neue Note vorgegebene Parameter aufweist,
die eingefügte Note als aktive Note angezeigt wird.

8. Verfahren nach einem der Ansprüche 5 bis 7,
**dadurch gekennzeichnet, dass**
ein Ton abgegeben wird, der einer Note auf der Linie entspricht, wenn die Note neu ausgewählt wird.

9. Verfahren nach einem der Ansprüche 5 bis 8,
**dadurch gekennzeichnet, dass**
ein Ton abgegeben wird, der einer Note auf der Linie entspricht, wenn die Note modifiziert wird.

10. Verfahren nach einem der Ansprüche 1 bis 9,
**dadurch gekennzeichnet, dass**
der Inhalt des Wiedergabespeichers durch den Inhalt einer Kurznachricht aktualisiert wird, die durch das Mobiltelephon empfangen wird.

11. Verfahren nach einem der Ansprüche 1 bis 10,
**dadurch gekennzeichnet, dass**
der Inhalt des Editierspeichers durch den Inhalt einer Kurznachricht aktualisiert wird, die durch das Mobiltelephon empfangen wird.

12. Verfahren nach einem der Ansprüche 1 bis 11,
**dadurch gekennzeichnet, dass**
der Inhalt des Wiedergabespeichers durch Daten aktualisiert wird, die durch das Mobiltelephon in einem Datenübertragungsmodus empfangen werden.

13. Verfahren nach einem der Ansprüche 1 bis 12,
**dadurch gekennzeichnet, dass**
der Inhalt des Editierspeichers durch Daten aktualisiert wird, die durch das Mobiltelephon in einem Datenübertragungsmodus empfangen werden.

14. Verfahren nach einem der Ansprüche 1 bis 13,
**dadurch gekennzeichnet, dass**
der Inhalt des Wiedergabespeichers über Funk ausgestrahlt wird.

15. Verfahren nach einem der Ansprüche 1 bis 14,
**dadurch gekennzeichnet, dass**
der Inhalt des Editierspeichers über Funk ausgestrahlt wird.

16. Verfahren nach einem der Ansprüche 1 bis 15,
**dadurch gekennzeichnet, dass**
der Inhalt des Wiedergabespeichers über ein Mikrophon des Mobiltelephons aktualisiert wird.

## Claims

1. Process for selection and broadcasting of a complex sound message broadcast by a mobile telephone (100), including the following steps:
- digital data corresponding to the complex sound message are stored in a broadcasting memory (105) of the mobile telephone,
- the complex sound message, contained in the broadcasting memory, is broadcast over a loudspeaker (107) of the mobile telephone,
- the content of an editing memory (108) of the mobile telephone is displayed (210) on a screen (109) of the mobile telephone,
- the content of the editing memory is modified (213) as a function of pressures applied to keys of a keyboard of the mobile telephone,
- the modifications to the content of the editing memory are viewed on the screen of the mobile telephone,
- a complex sound message is recomposed (217) from the content of the editing memory,
- the recomposed complex sound message is stored (217) in the broadcasting memory,
**characterised by** the fact that
- a sound corresponding to an element of the editing memory is broadcast at the moment when this element is selected and/or modified, over the loudspeaker.

2. Process as described in claim 1, **characterised by** the fact that:
- the complex sound message is broken down (204, 208) into a sequence of elementary messages,
- the sequence of elementary messages is stored (205, 209) in the editing memory.

3. Process as described in claim 1, **characterised by** the fact that a predetermined message is stored (203, 206) in the editing memory.

4. Process as described in one of claims 1 to 3, **characterised by** the fact that an element is selected (200) in a menu of the mobile telephone to access a musical score editor.

5. Process as described in one of claims 1 to 4, **characterised by** the fact that the elementary messages are displayed (210) as notes on a musical stave.

6. Process as described in claim 5, **characterised by** the fact that:
- a note on the stave is selected (212) using a key of the keyboard of the telephone,
- the parameters of the selected note, numbered among which are pitch and duration, are modified (213) using a key of the telephone.

7. Process as described in one of claims 5 or 6, **characterised by** the fact that:
- an active note is selected on the stave using a key of the mobile telephone,
- a new note is inserted (214) on the stave by pressing a key of the telephone, the position of the new note precedes that of the active note,
- the note inserted on the stave is displayed on the screen of the telephone, the new note has predetermined parameters,
- the inserted note is displayed as being the active note.

8. Process as described in one of claims 5 to 7, **characterised by** the fact that a sound is emitted corresponding to a note on the stave when the note is newly selected.

9. Process as described in one of claims 5 to 8, **characterised by** the fact that a sound is emitted corresponding to a note on the stave when the note is modified.

10. Process as described in one of claims 1 to 9, **characterised by** the fact that the content of the broadcasting memory is updated from the content of a short message received by the mobile telephone.

11. Process as described in one of claims 1 to 10, **characterised by** the fact that the content of the editing memory is updated from the content of a short message received by the mobile telephone.

12. Process as described in one of claims 1 to 11, **characterised by** the fact that the content of the broadcasting memory is updated from data received by the mobile telephone in a data transmission mode.

13. Process as described in one of claims 1 to 12, **characterised by** the fact that the content of the editing memory is updated from data received by the mobile telephone in a data transmission mode.

14. Process as described in one of claims 1 to 13, **characterised by** the fact that the content of the broadcasting memory is transmitted radioelectrically.

15. Process as described in one of claims 1 to 14, **characterised by** the fact that the content of the editing memory is transmitted radioelectrically.

16. Process as described in one of claims 1 to 15, **characterised by** the fact that the content of the broadcasting memory is updated from a microphone of the mobile telephone.
